(19) Europäisches Patentamt
European Patent Office
Office européen des brevets

(11) **EP 4 633 169 A1**

(12) **EUROPEAN PATENT APPLICATION**

(43) Date of publication:
**15.10.2025 Bulletin 2025/42**

(21) Application number: **24305566.2**

(22) Date of filing: **08.04.2024**

(51) International Patent Classification (IPC):
**H04N 19/82** (2014.01)    **H04N 19/117** (2014.01)
**H04N 19/70** (2014.01)    **H04N 19/463** (2014.01)
**H04N 19/176** (2014.01)    **H04N 19/86** (2014.01)

(52) Cooperative Patent Classification (CPC):
**H04N 19/82; H04N 19/117; H04N 19/176;**
**H04N 19/463; H04N 19/70; H04N 19/86**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **GALPIN, Franck**
**35235 THORIGNE-FOUILLARD (FR)**
• **BOISSON, Guillaume**
**35137 PLEUMELEUC (FR)**
• **BORDES, Philippe**
**35890 LAILLE (FR)**
• **LEFEBVRE, Frederic**
**35000 RENNES (FR)**

(74) Representative: **Interdigital**
**Immeuble ZEN 2**
**845 A, avenue des Champs Blancs**
**35510 Cesson-Sévigné (FR)**

(54) **METHOD AND APPARATUS FOR ENCODING/DECODING WITH IN-LOOP ADAPTIVE FILTERS**

(57)    In various implementations, methods and devices are disclosed that encode/decode a mapping between a class and a filter index, for instance for signaling ALF usage information with predictive coding. Besides, methods and devices are disclosed that encode/decode a filter index of a set of filters, for instance for signaling ALF usage information with predictive coding.

FIG. 9

EP 4 633 169 A1

**Description**

TECHNICAL FIELD

The present embodiments generally relate to a method and an apparatus for video encoding or decoding with in-loop adaptive filters.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction. To reduce encoding artifacts, in-loop filters, for example deblocking filter, SAO (Sample Adaptive Offset), Adaptive Loop Filter), are applied to the reconstructed picture.

SUMMARY

In various implementations, methods and devices are disclosed that encode/decode a mapping between a class and a filter index, for instance for signaling ALF usage information with predictive coding. Besides, methods and devices are disclosed that encode/decode a filter index of a set of filters, for instance for signaling ALF usage information with predictive coding.

According to a first aspect, a method of video decoding is disclosed that comprises receiving an encoded mapping comprising a mapping between a set of classes and a set of filters; wherein an ith element in the mapping indicates that a class i is mapped with a filter index representative a filter among the set of filters; for a current class in the set of classes, decoding a flag indicating that a filter index for the current class is equal to a filter index candidate, the filter index candidate being a last decoded filter index; and responsive to determining that the flag indicates that a filter index for the current class is equal to the filter index candidate, determining that the current class is mapped with the filter index of filter index candidate

According to a second aspect, a method of video decoding is disclosed that comprises for a current block, determining a list of filter index candidates based on a filter index of at least one neighboring block; and arithmetically decoding a filter index for the current block using a first context associated to a probability model of a first candidate in the list of candidates and a second context associated to a probability model of a second candidate in the list of candidates.

According to a third aspect, a method of video encoding is disclosed that comprises identifying a mapping between a set of classes and a set of filters, an ith element in the mapping indicates that a class i is mapped with a filter index representative a filter among the set of filters; responsive to determining that a filter index for the current class is equal to a filter index candidate, encoding a flag indicating that a filter index for the current class is equal to a filter index candidate; and including, in video data, the encoded flag.

According to a fourth aspect, a method of video encoding is disclosed that comprises for a current block, determining a list of filter index candidates based on a filter index of at least one neighboring block; arithmetically encoding a filter index for the current block using a first context associated to a probability model of a first candidate in the list of candidates and a second context associated to a probability model of a second candidate in the list of candidates; and including, in video data, the encoded filter index..

One or more embodiments also provide an apparatus for encoding/decoding video comprising one or more processors and at least one memory coupled to said one or more processors, wherein said one or more processors are configured to perform the encoding method according to any of the embodiments described herein.

One or more embodiments also provide a computer program comprising instructions which when executed by one or more processors cause the one or more processors to perform the encoding method according to any of the embodiments described herein. One or more of the present embodiments also provide a computer readable storage medium having stored thereon instructions for encoding or decoding a video according to the methods described herein.

One or more embodiments also provide a computer readable storage medium having stored thereon video data generated according to the methods described above. One or more embodiments also provide a method and apparatus for transmitting or receiving the video data generated according to the methods described herein.

BRIEF DESCRIPTION OF THE DRAWINGS

FIG. 1 illustrates a block diagram of a system within which aspects of the present embodiments may be implemented.

FIG. 2 illustrates a block diagram of an embodiment of a video encoder.

FIG. 3 illustrates a block diagram of an embodiment of a video decoder.

FIG. 4 illustrates example adaptive loop filter (ALF) shapes.

FIG. 5 illustrates a block diagram of an in-loop-filtering process according to an embodiment.

FIG. 6 illustrates example filter shapes of a signaled filter.

FIG. 7 illustrates an example of a current block and neighboring blocks for filter index signaling.

FIG. 8 and FIG. 9 illustrate a method for signaling a mapping between a class and a filter according to an embodiment.

FIG. 10 and FIG. 11 illustrate a method for signaling a filter index according to an embodiment.

FIG. 12 illustrates a method for signaling a filter according to an embodiment.

## DETAILED DESCRIPTION

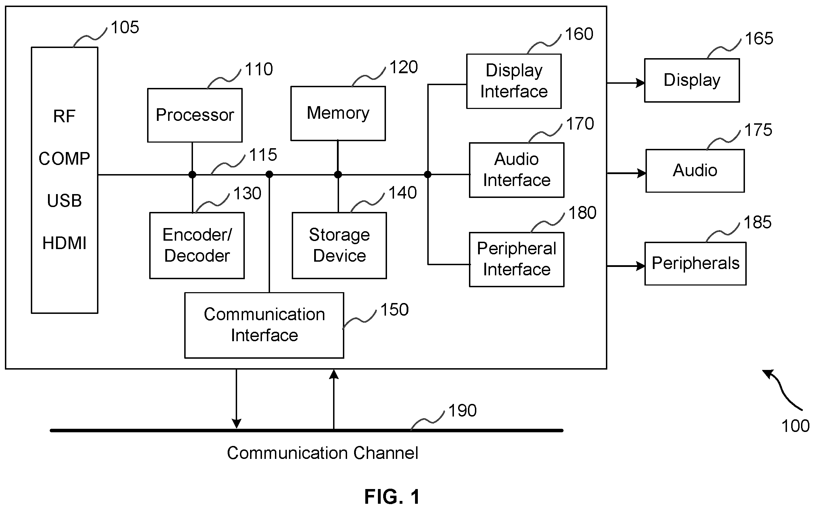

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802. 11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

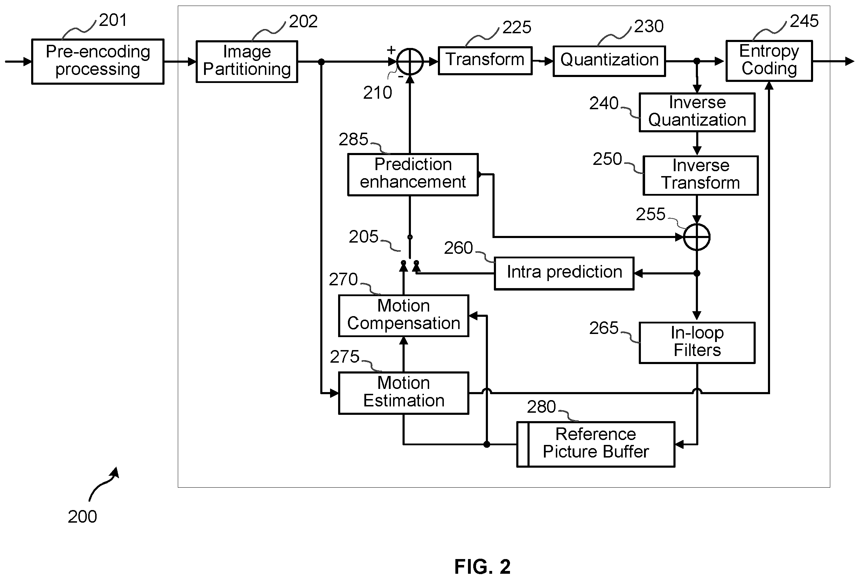

FIG. 2 illustrates an example video encoder 200, such as a VVC (Versatile Video Coding) encoder. FIG. 2 may also illustrate an encoder in which improvements are made to the VVC standard or an encoder employing technologies similar to VVC.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression. Metadata can be associated with the pre-processing, and attached to the bitstream (for example in the form of supplemental enhancement information (SEI) messages, for AVC, HEVC, and VVC standards).

In the encoder 200, a picture is encoded by the encoder elements as described below. The picture to be encoded is partitioned (202) and processed in units of, for example, CUs. Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. After prediction, prediction enhancement (285) is applied to the prediction block. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/Adaptive filtering to reduce encoding artifacts. The filtered image is stored at a reference picture buffer (280).

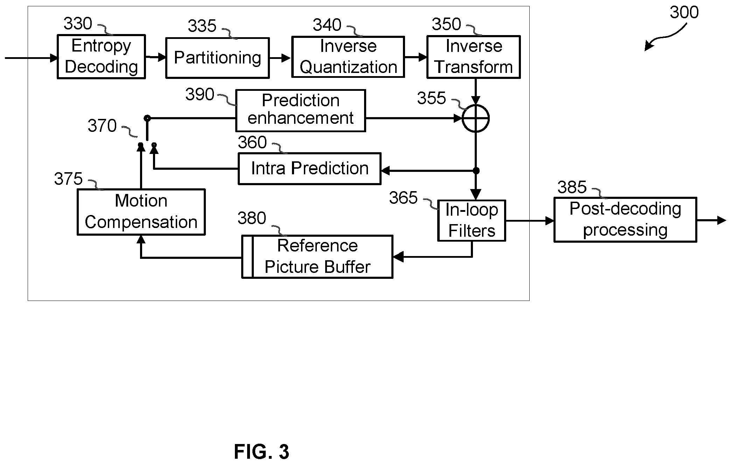

FIG. 3 illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). After prediction, prediction enhancement (390) is applied to the prediction block. In-loop filters (365) are applied to the reconstructed image. The filtered image is stored at a reference picture buffer (380).

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

Recent additions to video compression technology include various industry standards, versions of the reference software and/or documentations such as Enhanced Compression Model (ECM) being developed by the JVET (Joint Video Exploration Team) group. The aim is to make further improvements to the existing VVC (Versatile Video Coding) standard and VSEI specification.

A syntax cost of adaptive loop filter (ALF) syntax elements may be reduced. Feature(s) described herein may be extended to other (e.g., any other) in-loop or post-filter where mapping or filtering scheme information are signaled in the bitstream.

Feature(s) associated with ALFs are provided herein.

An ALF may be based on adaptive filters. Adaptive filters may be applied to reduce the mean squared error (MSE) between the original and the reconstructed samples. For example, adaptive filters may be applied to reduce the mean squared error (MSE) between the original and the reconstructed samples using Wiener-based filtering. An ALF may be the last post-filter applied to the output of sample adaptive offset (SAO).

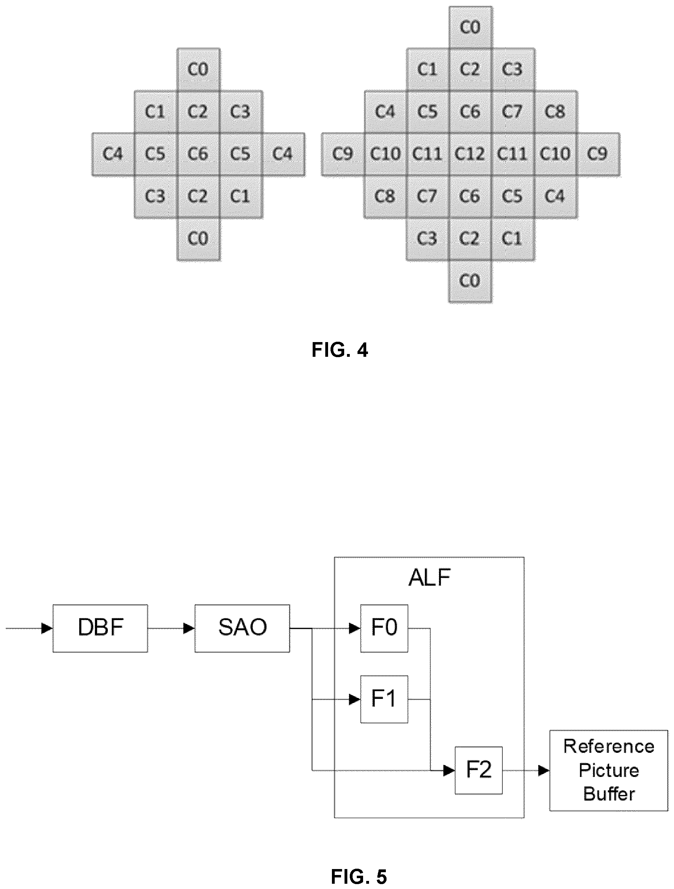

An ALF may include a classification of non-overlapping sub-blocks (e.g., based on local sample gradients of the sub-blocks). For a class (e.g., each class), a specific filter may be applied (e.g., from among the different filters signaled in the bitstreams). For instance, the different filters may be arranged in a set of filter sets (e.g. one or more set of fixed filters and one or more set of signaled filters as described below with FIG. 5), an index may determine a filter set to select among the set of filter sets and a classification may determine a specific filter in the selected filter set. Based on the classification, a geometric transformation of coefficients within a filter shape (e.g., 90-degree rotation, diagonal or vertical flip, etc.) may be applied.

Feature(s) associated with filter shape are provided herein.

FIG. 4 illustrates example ALF filter shapes. One or more (e.g., two) filter shapes (e.g., 7×7 diamond shape and/or 5×5 diamond shape) may be used for Luma and Chroma components (e.g., a 7×7 diamond shape for Luma components and/or 5×5 diamond shape for Chroma components, as shown in FIG. 4). A square (e.g., each square) may correspond to a Luma or a Chroma sample. The center square may denote the current to-be-filtered sample. To reduce the signaling overhead and/or the number of multiplications, the filter coefficients may use point-symmetry.

For example, as shown on the left of FIG. 4, a 5×5 diamond may be used for Chroma components. As shown on the right of FIG. 4, a 7×7 diamond may be used for Luma components.

An integer filter coefficient (e.g., each integer filter coefficient), $c_i$, may be represented with n-bit fractional precision. DC may denote the lowest frequency of a signal (e.g., an average of the signal). DC neutrality may be preserved. For example, preserving DC neutrality may indicate that a filter will preserve the average of the signal. To preserve DC neutrality, the sum of coefficients of one filter may be (e.g., must be) equal to 128 = 1 « $n$.

$$2\left(\sum_{i=0}^{N-2} c_i\right) + c_{N-1} = 128 \tag{1}$$

In an example, n may be equal to 7.

In Eq. (1), the number of coefficients, N, may be equal to 13 for a 7x7 filter shape. In Eq. (1), the number of coefficients, N, may be equal to 7 for a 5x5 filter shape.

Feature(s) associated with linear filtering are provided herein.

A filtered sample value $\bar{R}(x, y)$ may be obtained (e.g., because of point-symmetry and DC neutrality) by adding the reconstructed sample $R(x, y)$ and a weighted sum of the differences between the to-be-filtered sample $R(x, y)$ and its neighboring samples:

$$\bar{R}(x,y) = R(x,y) + \left(\left\lceil\sum_{i=0}^{N-2} c_i \times (\Delta R_i^+ + \Delta R_i^-)\right\rceil + 64\right) \gg 7 \tag{2}$$

with:

$$\Delta R_i^+ = R(x + x_i, y + y_i) - R(x,y)$$
$$\Delta R_i^- = R(x - x_i, y - y_i) - R(x,y) \tag{3}$$

where $(x + x_i, y + y_i)$ and $(x - x_i, y - y_i)$ are the coordinates of the reconstructed samples corresponding to the $i$-th coefficient $c_i$ (e.g., point symmetry).

Feature(s) associated with non-linear filtering are provided herein.

If non-linear ALF is enabled, Eq. (2) may be modified as follows:

$$\bar{R}(x,y) = R(x,y) + \left\lceil\sum_{i=0}^{N-2} c_i \times (f_i^+ + f_i^-) + 64\right\rceil \gg 7 \tag{4}$$

with:

$$f_i^+ = \min\left(b_i, \max\left(-b_i, R(x + x_i, y + y_i) - R(x,y)\right)\right)$$
$$f_i^- = \min\left(b_i, \max\left(-b_i, R(x - x_i, y - y_i) - R(x,y)\right)\right) \tag{5}$$

where $b_i$ is the clipping parameter for the coefficient $c_i$. The clipping parameter $b_i$ may be determined based on a clipping index $d_i$. For example, the clipping parameter $h_i$ may be derived as follows:

$$b_i = \begin{cases} 2^{BD} & \text{when } d_i = 0 \\ 2^{BD-1-2d_i} & \text{otherwise} \end{cases} \tag{6}$$

where *BD* denotes the sample bit depth. In examples, $d_i$ may be 0, 1, 2 or 3.

Feature(s) associated with luma sub-block classification are provided herein.

Filter adaptation at sub-block level may apply (e.g., only apply) to Luma. A sub-block (e.g., each sub-block, for example, 4×4) may be classified based on the sub-block's directionality (*D*) and/or Laplacian activity (*A*).

The activity value *A* may be mapped to the range of 0 to 4, inclusively. The quantized value may be denoted as *Â*. A Luma sub-block (e.g., each Luma sub-block) may be categorized into a class. For example, a Luma sub-block may be categorized into a class of the 25 classes represented by:

$$C = 5D + \hat{A} \qquad\qquad (7)$$

A class (e.g., each class) may have an assigned filter (e.g., its own filter assigned). Classification may not be applied for Chroma.

Feature(s) associated with geometric transformations are provided herein.

A geometric transformation (e.g., a rotation or diagonal and/or vertical flipping) may be applied to the filter coefficients (e.g., before filtering each Luma sub-block). The geometric transformation may be applied, for example, depending on the sub-block gradient values. The geometric transformation may align the directionally of the different blocks (e.g., to reduce the number of ALF classes). For example, applying the geometric transformation may allow a sub-block with a horizontal edge and a sub-block with a vertical edge to both have the same directionality *D*.

Feature(s) associated with coding tree block (CTB)-level filter selection are provided herein. Adaptive loop filtering may involve filter adaptation at the CTB level (e.g., in addition to the Luma sub-block-level classification).

A Luma CTB may use a filter set calculated for the current slice. A Luma CTB may use a filter set (e.g., one of the filter sets) calculated for the already-coded slices. A Luma CTB may use an offline trained filter set (e.g., from N offline trained filter sets, for example, where N = 16). Within a Luma CTB (e.g., each Luma CTB), a filter (e.g., from the chosen filter set) to be applied to a sub-block (e.g., each sub-block) may be determined based on the class C calculated in Eq. (7) for the block.

Chroma may use (e.g., only use) CTB-level filter adaptation. One or more (e.g., up to 8) filters may be used for Chroma components in a slice. A CTB (e.g., each CTB) may select one of the filters.

Feature(s) associated with ALF syntax are provided herein.

Filter coefficients and/or clipping indices may be carried in one or more ALF adaptation parameter sets (APSs). An ALF APS may include one or more (e.g., up to 8) Chroma filters and/or a (e.g., one) Luma filter set (e.g., with up to 25 filters). An index $i_C$ may be included for each Luma class (e.g., each of the 25 Luma classes). Classes having the same index $i_C$ may share the same filter. By merging different classes, the number of bits used (e.g., required) to represent the filter coefficients may be reduced. The absolute value of a filter coefficient may be represented using a zero-order exponential-Golomb code and (e.g., followed by) a sign bit for non-zero coefficients. If clipping is enabled, a clipping index may be signaled for a filter coefficient (e.g., each filter coefficient) using a (e.g., two-bit) fixed length code.

Filter control syntax elements may include one or more (e.g., two) types of information. ALF On/Off flags may be signaled at sequence-, picture-, slice-, and/or CTB-levels. Chroma ALF may be enabled at picture- and/or slice-level if (e.g., only if) Luma ALF is enabled at the corresponding level. Filter usage information may be signaled at picture-, slice-, and/or CTB-level (e.g., if ALF is enabled at that level). Referenced ALF APS IDs may be coded at slice-level or at picture-level (e.g., if all the slices within the picture use the same APSs). Luma component may reference one or more (e.g., up to 7) ALF APSs. Chroma components may reference a (e.g., 1) ALF APS. For a Luma CTB, an index may be signaled. The index may indicate which ALF APS or offline-trained Luma filter set is used. For a Chroma CTB, the index may indicate which filter in the referenced APS is used.

Feature(s) associated with encoder-side processes are provided herein.

The encoder may calculate value(s) of ALF syntax (e.g., as described herein) by minimizing a rate-distortion cost. The rate-distortion cost may be a weighted sum of the distortion (e.g., measured as the square error between the original samples and the sample after applying the ALF filter) and the number of bits used (e.g., required) to transmit ALF syntax elements.

Filter coefficients may be calculated by solving one or more Wiener-Hopf equations. The statistics used (e.g., required) to calculate filter coefficients and estimate distortion may be collected for the possible combinations (e.g., all possible combinations) of clipping indices. The statistics may be collected for a CTB (e.g., separately for each CTB). In the case of a Luma component, the statistics may be collected for a class of a CTB (e.g., each class of each CTB).

ALF developments may be unstandardized. Feature(s) associated with a classifier (e.g., a new classifier) and fixed filtering for Luma are provided herein.

A classifier may be based on Luminance bands. C0 may denote the legacy Laplacian-based classifier. C1 may denote the classifier (e.g., the band classifier) based on Luminance bands.

FIG. 5 illustrates a block diagram of an in-loop-filtering process according to an embodiment. The embodiment of FIG.5 is for instance adapted to the new classifier and fixed filtering for Luma as described herein. One or more (e.g., three) different sets of filters (e.g., F0, F1 and F2) may be used to filter a Luma sample. Sets F0 and F1 may include fixed filters (e.g., filters with coefficients trained for classifiers C0 and C1). Coefficients of filters in set F2 may be signaled. In an example, $R_0(x, y)$ and $R_1(x, y)$ may denote the intermediate sample values filtered by F0 and F1, respectively. The filter F2 may be applied to $R_0(x, y)$, $R_1(x, y)$, and the neighboring samples to derive a final filtered sample. For example, the final filtered sample may be represented as:

$$\bar{R}(x, y) = R(x, y) + \left[ \sum_{i=0}^{19} c_i \times (f_i^+ + f_i^-) \right] + \left[ \sum_{i=20}^{21} c_i \times g_i \right] \qquad (8)$$

where $f_i^{+/-}$ denotes the clipped difference between a neighboring sample and $R(x, y)$, and $g_i$ denotes the clipped difference between $R_{20-i}(x, y)$ and a current sample value. FIG. 5 illustrates the derivation of the final filtered sample (e.g., using an ALF process).

F0 and F1 may be pre-learned filters trained on classifiers C0 and C1, respectively. F2 may be signaled. F2 may use either classifier C0 or C1. The filter coefficients $(c_i)_{0 \leq i \leq 21}$ may be signaled.

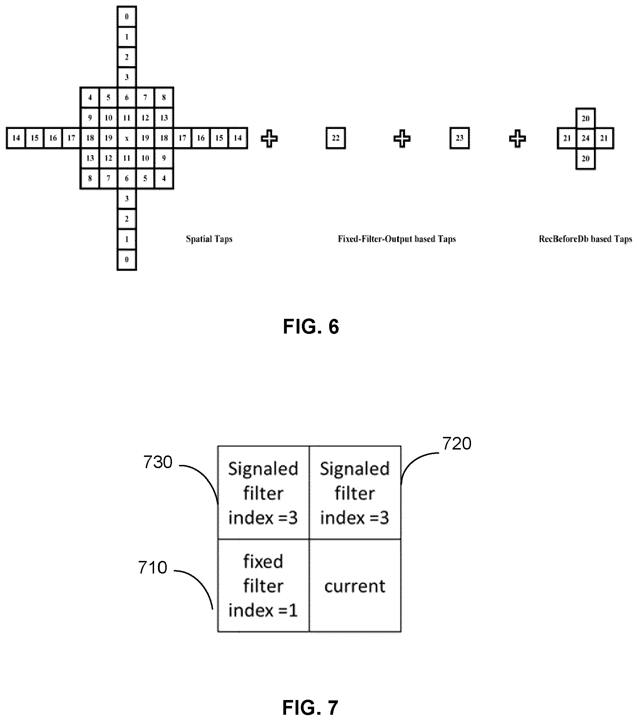

FIG. 6 illustrates an example filter shape of the signaled filter F2. Filter shapes and sizes may be changed. Samples may be considered before deblocking in the signaled filter, as illustrated in FIG. 6.

Signaled filter input may be diversified. For example, filter input may be diversified with collocated samples in reference pictures, pre-DBF samples (e.g., that have been filtered by a fixed filter), or residual samples. A classifier based on residue L1 may be used.

The encoder may choose the filter to apply (e.g., based on rate-distortion optimization (RDO)) to a sub-block. The encoder may transmit to a decoder information related to the mapping between a class and a filter within a filter set. Besides, the encoder may transmit to a decoder information relative to the filter set to select for a part of an image. To reduce the syntax cost of the above information, the present document proposes an optimized signaling of the mapping between a class and a filter and an optimized filter index and filter alternative index coding by introducing predictive index coding. In the following, signaling methods at the decoder are described, however the skilled in the art will non-ambiguously derived the signaling methods at the encoder corresponding to the decoding.

Feature(s) associated with signaling of the mapping between a class and a filter are provided herein.

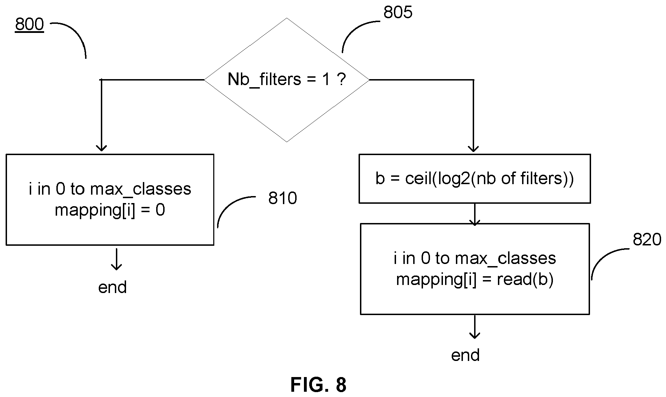

FIG. 8 illustrates a method for signaling a mapping between a class and a filter according to an embodiment. The method 800 of FIG. 8 may be implemented in a decoder of FIG. 3. As detailed above, when decoding a filter set, the mapping between the class index (e.g., from 0 to 25) and the filter to use inside the filter set is decoded. The mapping may be coded as an index in the filter set. The index may be coded using a fixed length direct binarization of the index using $n$ bits. In a first variant of the first embodiment $n$ is set equal to ceil(log2($nb\_filters$)) where $nb\_filters$ is the number of filters in the filter set. A mapping between a set of classes and a set of filters may be represented as a table of one-dimension mapping[i] wherein an $i^{th}$ element in the mapping table indicates that the class i (e.g., from 0 to $max\_classes$ not included) is mapped with a filter index representative a filter among the one or more filters in the filter set ((e.g., from 0 to $nb\_filters-1$). The variable $max\_classes$ is the number of classes. As shown on FIG. 8, the method 800 for signaling the mapping comprises a test 805 for determining whether the number of filters $nb\_filters$ in a filter set is larger than one. In the case 810 where $nb\_filters$ is equal to one, the filter index of that filter is zero and the mapping table is set to zero (mapping[i] = 0). In the case 820 where $nb\_filters$ is larger than one, for each class, a filter index is decoded from the bitstream using a fixed length decoding and the mapping table is set to decoded index (mapping[i] = read(b) with b= ceil(log2($nb\_filters$))). The function read(n) a function reading $n$ bits in the bitstream.

An example of pseudo code for decoding a mapping (*decodeMapping*) between a class and a filter corresponding to the embodiment of FIG. 8 is as follows:

```
function decodeMapping(nb_filters)
if nb_filters == 1 then
  for i in range(0,max_classes) do
    mapping[i]=0
  done
  return
endif
b=ceil(log2(nb_filters))
for i in range(0,max_classes) do
  mapping[i]=read(b)
done
```

According to a first embodiment, a method for signaling a mapping between a class and a filter is modified by maintaining as a most likely candidate the last coded index. Advantageously, as some successive classes are more likely assigned a same filter in the filter set, this coding is more efficient than the method of FIG. 8.

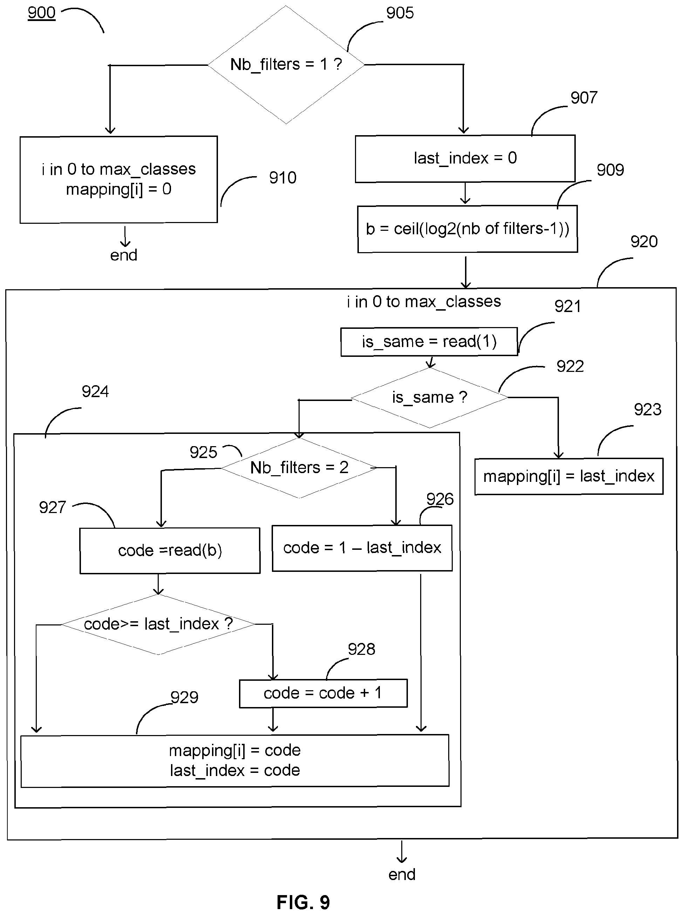

FIG. 9 illustrates a method for signaling a mapping between a class and a filter according to a first embodiment. The method 900 of FIG. 9 may be implemented in a decoder of FIG. 3 or adapted for an encoder of FIG. 2. Various embodiments are described in the following that may be used in combination or independently. The method 900 for signaling the mapping may comprise a test 905 for determining whether the number of filters $nb\_filters$ in a filter set is larger than one. In the case 910 where $nb\_filters$ is equal to one, the filter index of that filter is zero and the mapping table is set to zero (mapping[i] = 0). In the case 920 where $nb\_filters$ is larger than one, a variable last_index may store a more likely candidate for the filter index being the last decoded filter index. According to a particular feature, a flag $is\_same$ is signaled that indicates whether a filter index for a current class is the same as a filter index ($last\_index$) of the class preceding the current class in the mapping. In 907, the filter index candidate last index may be initialized to 0. However, last index may be initialized to any value of filter index.

According to another particular feature, the index of the more likely filter index candidate ($last\_index$) may be removed from the number of indices to signal. Thus, in 909, the number b of bits to read in the bitstream for decoding the filter index is set to b= ceil(log2($nb\_filters-1$)). According to another feature, for the first class, the last coded index is set to 0.

Then, in 920, the mapping is decoded from the bitstream. For a current class $i$ among the set of classes from 0 to $max\_classes$, a binary flag $is\_same$ is read 921 from the bitstream indicating whether a filter index for a current class is equal to the filter index candidate (($last\_index$), i.e. is the same as a filter index of the class i-1 preceding the current class i in the mapping. The flag $is\_same$ is tested in 922. If flag $is\_same$ indicates that the filter index for a current class is equal to the filter index candidate, the method goes to 923. In 923, the mapping table for the current class i is set to the filter index candidate (mapping[i] = last_index) and no further read of bits in the bitstream is needed for the current class. The step 920 is iterated for a next class i+1. If flag $is\_same$ indicates that the filter index for a current class is not equal to the filter index candidate, the method goes to 924. In 924 a decoding of the filter index is performed. According to a variant illustrated on FIG. 9, a decoded code may be adjusted to take into account the fact that the index is not the previous one. According to a yet another variant, a decoded code may be adjusted to when only 2 filters are available in the set. According to a particular variant, in 925, the number of filters may be tested. Advantageously, the reading of bits in the bitstream may be skipped if the filter set comprises only two filters. In the case 926 where $nb\_filters$ is equal to two, the filter index of that filter is complementary to the last_index and a variable code may be inferred to 1-last index. In the case 927 where $nb\_filters$ is larger than two, a code is read from b bits in the bitstream (read(b) with b= ceil(log2($nb\_filters-1$))) using a fixed length decoding. As the value of the last_index may be removed from the coded values, in case where the code is larger or equal to last_index, the value code read from the bitstream is increased 928 by one, otherwise the code is unchanged. In a final step 929, the mapping table is set to code (mapping[i] = code) and the variable last_index is updated with code being the last decoded filter index. The decoding 924 of the filter index for the current class ends and the step 920 is iterated for a next class i+1.

An example of pseudo code for decoding a mapping ($decodeMapping$) between a class and a filter corresponding to the embodiment of FIG. 9 is as follows:

```
function decodeMapping(nb_filters)
if nb_filters == 1 then
  for i in range(0,max_classes) do
    mapping[i]=0
  done
  return
endif
b=ceil(log2(nb_filters-1))
last_index = 0
for i in range(0,max_classes) do
  is_same = read(1)
  if is_same then
    mapping[i]=last_index
  else
   if nb_filters > 2 then
     code = read(b)
     if code >= last_index
       code = code + 1
     endif
   else
     code = 1-last_index
   endif
   mapping[i]=code
   last_index=code
done
```

According to yet another variant, encoder may reorder the filters inside a filter set in order to minimize the cost of the mapping to transmit. For example, a reordering may put the index for the first class to be 0. In a variant, the index of the first class is always 0 (filters are reordered to follow this constraint) and the index of the first class is not transmitted.

Feature(s) associated with filter index and filter alternative index coding by introducing predictive index coding are provided herein.

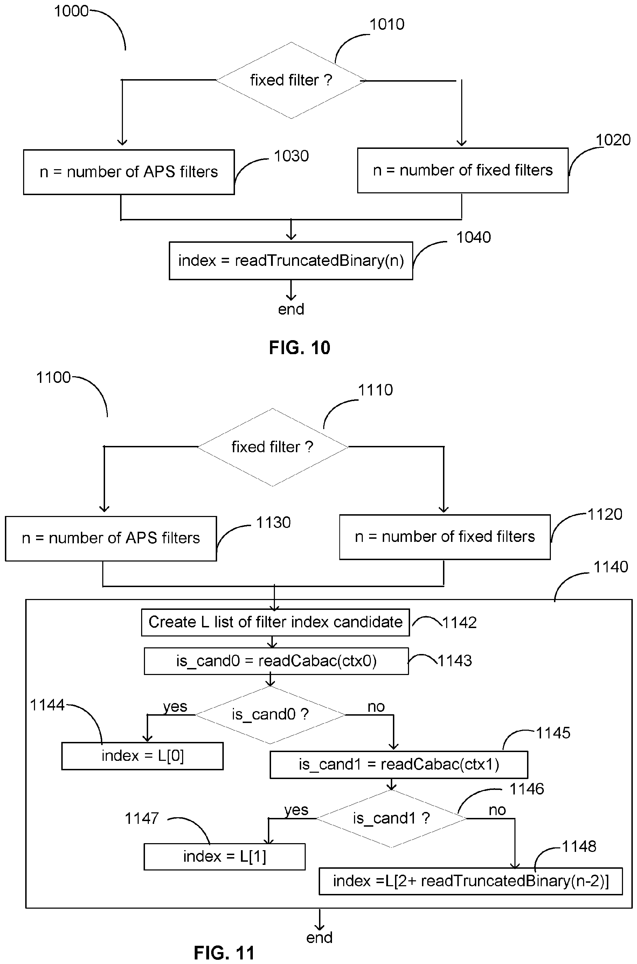

FIG. 10 illustrates a method for signaling a filter index according to an embodiment. The method 1000 of FIG. 10 may be implemented in a decoder of FIG. 3. As detailed above, when decoding a block (e.g. a CTB), several ALF parameters are decoded. For instance, ALF On/Off flags (e.g. 1b bit) may be signaled at the CTB-level for the Luma component (Luma CTB). Filter usage information may be signaled at CTB level (e.g., if ALF is enabled at that level). As a Luma component may reference one or more (e.g., up to 7) ALF APSs and fixed filters for a Luma CTB, an index may be signaled. The index may indicate which ALF APS or offline-trained Luma filter set is used. As shown on FIG. 10, the method 1000 for signaling a filter index comprises a test 1000 for determining whether a fixed filter or a signaled filter (i.e; ALF APSs) is used for the current CTB by reading a bit from the bitstream (read(1)). The number of filters n is set depending on the filter type in 1020 or 1030. In the case 1020 where the CTU is using the fixed filters (first signaled with a flag), then the index is decoded 1040 among the number n of fixed filters (e.g n= 2, in that variant, a single flag is needed). In the case 1030 where the CTU is using the signaled filters, the index is decoded 1040 among the number n of available ALF APSs (i.e. APS filters). In a variant where only 1 APS is available, the index is directly deduced as being 0. In a variant where only more than one ALF APSs are available, the index of the APS is decoded for example using a truncated binary decoding.

An example of pseudo code for decoding a filter index (*decodeFilterIndex*) corresponding to the embodiment of FIG. 10 is as follows:

```
function decodeFilterIndex()

    if use fixed filter then
    n = number of fixed filters
    else
    n = number of available APS
    if n <= 1 then
    return 0
    endif

    index = readTruncatedBinary(n)
    return index
```

According to a second embodiment, a method for signaling a filter index is modified by introducing predictive coding. Advantageously, as a filter index for a current CTB may be derived from filter index of neighboring CTBs, this coding is more efficient than the method of FIG. 10.

FIG. 11 illustrates a method for signaling a filter index according to a second embodiment. The method 1100 of FIG. 11 may be implemented in a decoder of FIG. 3 or adapted for an encoder of FIG. 2. Various embodiments are described in the following that may be used in combination or independently. In a variant, in order to exploit correlation of APS index between CTB, it is proposed to create a list of candidates of probable index, by taking into account the nature of the index. Then cabac coded flags are decoded to signal if the index for the current CTB is the first one in the list, or the second one etc. Finally, after a certain amount of cabac decoded bin, the remaining of the index are decoded using for example a truncated binary decoding. According to a particular variant, only 2 bins are used for cabac decoding and the remaining (when more than 3 APS are available) uses a truncated binary decoding.

As shown on FIG. 11, the step 1140 for decoding a filter index among a number n of available filters of a given type (fixed or signaled) may be modified to use a list of two candidates for instance. In a step 1141, for a current block, a list of filter index candidates is determined based on a filter index of at least one neighboring block. The construction of candidate list is detailed hereafter. Then, a first cabac coded flag is decoded 1142 to signal if the index for the current CTB is the first one in the list based on a first context (Ctx0) associated to a probability model of a first candidate (cand0) in the list of candidates. In 1144, the filter index is set to the first candidate (cand0) if the index for the current CTB is the first one. Otherwise, a second cabac coded flag is decoded 1145 to signal if the index for the current CTB is the second one in the list based on a second context (Ctx1) associated to a probability model of a second candidate (cand1) in the list of candidates. In 1147, the filter index is set to the second candidate (cand1) if the index for the current CTB is the second one. Otherwise in 1148, the filter index (among the number of filter index minus 2 corresponding to the first and second candidates) obtained by a truncated binary decoding.

The skilled in the art will notice that additional variant regarding conditions on the number of filter indices to signal (e.g. lower than or equal to 1, larger than or equal to 2 larger than or equal to 2) are not represented on FIG. 11 but may be implemented to further reduce the number of bits to code a filter index. Such variant is described in the example of pseudo code for decoding a filter index (*decodeFilterIndex*) corresponding to the embodiment of FIG. 11 is as follows:

```
function decodeFilterIndex(x,y)

    if use fixed filter then
```

```
        n = number of fixed filters
      else
        n = number of available APS
      endif
      if n <= 1 then
        return 0
      endif
      L = createCandidateList(x,y)
      addMissingIndex(L,n)
      is_candidate0 = readCabac(ctx0)
      if is_candidate0 then
        return L[0]
      endif
      if n == 2:
        return L[1]
      endif
      is_candidate1 = readCabac(ctx1)
      if is_candidate1 then
        return L[1]
      endif
      if n == 3 then
        return L[2]
      endif
      index = 2+readTruncatedBinary(n-2)
      return L[index]
```

The function may use the coordinate x and y of the CTB. The function createCandidateList(x,y) may return a list containing the list of valid index of the neighboring CTB, for example the left one, top one and top left one. According to a variant, the index of the left adjacent block, the index of the top adjacent block and the index of top left neighboring block are ordered in the list while any order and any neighboring blocks (for instance top-right or bottom-left) may be compatible with the present principles. According to a variant, to be added to the list, an index of a neighboring CTB may comply with the following conditions. According to a first condition, a neighboring CTB may be valid, for example not outside the slice or tile of the current CTB. According to second condition, a current CTB may be of the same type as the current CTU: either fixed filter or signaled filter. According to third condition, an index of a current CTB may not already be in the list.

FIG. 7 illustrates an example of a current block and neighboring blocks for filter index signaling. In example of the FIG. 7, the candidate list may contain the index [3] if the current CTB is in signaled filter mode: the left index 710 is not added because the type of filter (fixed vs signaled) is different, the top index 720 is added in the list (3) as the first candidate and the top-left index is not added to the candidate list because the index [3] is already in the list.

A function addMissingIndex(L) may then append indexes not already in the list to the list. With the example above, for a number of ALF APSs of 5, the final candidate list may be : L=[3,0,1,2,4]. In a variant the indexes are added in order of the scanning of the neighboring CTB (e.g left, top and top-left). In another variant, the indexes are added in order of occurrence (the most occurring to the least one) from already decoded indexes.

The readCabac(ctx) performs a cabac decoding of the bin using context ctx. In the example above, several contexts are associated with the first and second decoding corresponding to is_candidate0 and is_candidate1 syntax element. In a variant, the contexts associated with the fixed filter mode and the signaled filter mode are also different.

According to another variant of the second embodiment, the cabac coding of the n first candidates (2 in the example of FIG. 10) is used only when the candidates are coming from the createCandidateList() function (ie derived from a neighboring CTU), and the readTruncatedBinary() for candidates added later by the addMissingIndex() function. In the previous example with the list L=[3,0,1,2,4], a first the syntax element is_candidate0 is read using readCabac(ctx0) because 3 is a candidate from the neighboring CTU. Assuming the index for the current CTU is 2, the decoded value of is_candidate0 would be 0. Then the remaining index may be read using truncated binary code since the remaining indexes are produced by addMissingIndex(). The decoding would then be: index = 1+readTruncatedBinary(n-1). The value 1 is obtained from the fact that only 1 candidate was already removed from the list of potential candidate (it is not the first one).

Feature(s) associated filter alternative index coding by introducing predictive index coding are provided herein.

According to a variant of the second embodiment, a method for decoding the alternative filter index (only used for signaled filter) may be used that comprises a cabac decoding based on a full binarization of the index. An example of pseudo code for decoding an alternative filter index *(decodeAlternativeFilterIndex)* may be as follows:

```
function decodeAlternativeFilterIndex(x,y)

    n = number of alternative filter available
    index = 0
    while(index < n-1 and readCabac(ctxA)) do index++

done
return index
```

According to another variant of the second embodiment, in order to exploit further the correlation between indexes of neighboring CTB, an algorithm similar to the one used for decoding the alternative filter index above may be used. An example of pseudo code for a modified decoding of an alternative filter index (*decodeAlternativeFilterIndex*) may be as follows:

```
function decodeAlternativeFilterIndex(x,y)

    n = number of alternative filter available
    L = createAltCandidateList(x,y)
    addMissingIndex(L,n)
    index2 = 0
    while(index2 < n-1 and readCabac(ctx(index2))) do index2++

done
return L[index]
```

Compared to previous version, the decoded index is used to index the list L of candidates. The createAltCandidateList() is similar to the previous createCandidateList but further constraints are added to add an index in the list. A first constraint, is that the candidate may be issued from a valid CTB, for example not outside the current slice or tile. A second constraint is that the candidate may be of the same type as the current CTB, ie: signaled filter. A third constraint is that the candidate may have a same APSs index as the current CTB. A fourth constraint is that the candidate is not alrealy in the list of candidtates.

The function addMissingIndex is similar to before: missing indexes are appended to the list. Compared to the initial variant for decoding an alternative filter index (*decodeAlternativeFilterIndex*), a separate cabac context model is associated with each value index2.

According to another variant of the second embodiment, the CTB filter type (fixed or signaled) is not decoded at the beginning of the method for decoding CTB parameters. According to a particular feature, all filters (fixed and signaled) are added to a unified list and an index in this unified list is decoded. The function returns both the type of filter for the CTB and the filter index.

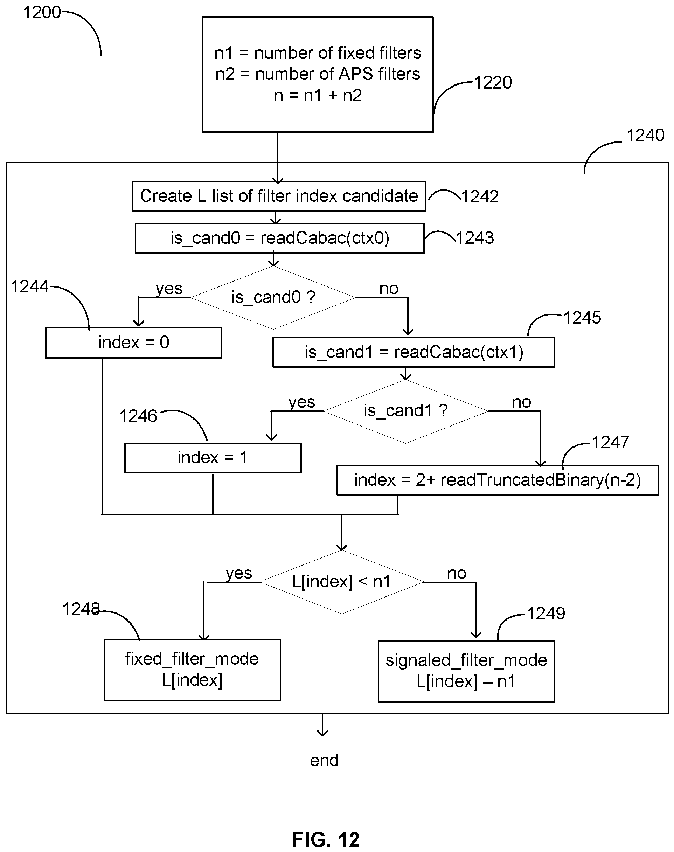

FIG. 12 illustrates a method for signaling a filter index according to a variant of the second embodiment. The method 1200 of FIG. 12 is a modified version of the method of FIG. 11 with a list of candidates with all filters, i.e. independent of the filter type. The method 1200 of FIG. 12 may be implemented in a decoder of FIG. 3 or adapted for an encoder of FIG. 2. Various embodiments are described in the following that may be used in combination or independently.

As shown on FIG. 12, in the step 1220, a number n of candidates in a list of candidates L is set to the sum of the number n1 of fixed filters and the number n2 of signaled filters. In 1240 a filter index and a filter type (*fixed_filter_mode or signaled_filter_mode*) among a number n of available filters of all types (fixed or signaled) may use a list of candidates for instance.

In a step 1242, for a current block, a list of filter index candidates is determined based on a filter index of at least one neighboring block where the indices 0 to n1-1 gathers the fixed filter indices and the index n1 to n1+n2-1 gathers the signaled filter type. Then, a first cabac coded flag is decoded 1143 to signal if the index for the current CTB is the first one in the list based on a first context (Ctx0) associated to a probability model of a first candidate (cand0) in the list of candidates. In 1244, the index (here index represents an element in the list of candidate) is set to 0, thus corresponding to the filter index of the first candidate (L[0]) if the index for the current CTB is the first one. Otherwise, a second cabac coded flag is decoded 1245 to signal if the index for the current CTB is the second one in the list based on a second context (Ctx1) associated to a probability model of a second candidate (cand1) in the list of candidates. In 1146, the index is set to 1, thus corresponding to the second candidate (L[1]) if the index for the current CTB is the second one. Otherwise in 1247, the index (among the total number of filter index in the list minus 2 corresponding to the first and second candidates) is obtained by a truncated binary decoding.

In final decoding steps, the value L[index] is obtained by reading the list L at the position index and is compared to n1 the number of fixed filters in the list. If 1248 L[index] is lower than n1, then the filter may be of type fixed filter (fixed_filter_mode) and the filter index is L[index]. Otherwise, if 1249 L[index] is larger than or equal to n1, then the filter may be of type signaled filter (signaled_filter_mode) and the filter index is L[index] -n1.

An example of pseudo code for a modified decoding of an alternative filter index (*decodeAlternativeFilterIndex*) may be as follows:

```
function decodeFilterIndex(x,y)
  n1 = number of fixed filters
  n2 = number of available APS
  n = n1 + n2
  if n <= 1 then
    return 0
  endif
  L = createCandidateList(x,y)
  addMissingIndex(L,n)
```

```
is_candidate0 = readCabac(ctx0)
if is_candidate0 then
  if L[0] < n1 then
    return fixed_filter_mode, L[0}
  else
  return signaled_filter_mode, L[0]-n1
  endif
endif
 if n == 2:
if L[1] < n1 then
    return fixed_filter_mode, L[1}
  else
  return signaled_filter_mode, L[1]-n1

  endif
  endif
  is_candidate1 = readCabac(ctx1)
  if is_candidate1 then

if L[1] < n1 then
    return fixed_filter_mode, L[1}
  else
  return signaled_filter_mode, L[1]-n1

  endif
  endif
if n == 3 then

if L[2] < n1 then
    return fixed_filter_mode, L[2}
  else
  return signaled_filter_mode, L[2]-n1

  endif
  endif
index = 2+readTruncatedBinary(n-2)
if L[index] < n1 then
```

return fixed_filter_mode, L[index}

else

return signaled_filter_mode, L[index]-n1

In this variant, the createCandidateList function may be changed to return a list containing the list of valid index of the neighboring CTU, for example the left one, top one and top left one. To be added to the list, an index of a neighboring CTU may be a valid CTB, for example not outside the current slice or tile as explained above; not already in the list and if the CTB uses fixed filter, add the filter index as is in the list L, if not add filter index+n1 in the list. Fixed filters are then indexed from 0 to n1 (not included) and signaled indexes from n1 to n1+n2-1 (not included). The addMissingIndex() function adds the missing indexes of both fixed filters and signaled filters using the same principles.

In a variant, when the number of signaled filter is more than 0 and the candidate list before adding missing candidates is less than the maximum number of cabac read bins, then the first signaled filter is pushed in the list if it is not already there.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application can be used to modify modules, for example, the motion compensation module (270) of a video encoder 200 as shown in FIG. 2. Moreover, the present aspects are not limited to ECM and VVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

Note that the syntax elements as used herein are descriptive terms. As such, they do not preclude the use of other syntax element names.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:

**Claims**

1. A method for video decoding, the method comprising:

    receiving an encoded mapping comprising a mapping between a set of classes and a set of filters; wherein an $i^{th}$ element in the mapping indicates that a class i is mapped with a filter index representative a filter among the set of filters;
    for a current class in the set of classes, decoding a flag indicating that a filter index for the current class is equal to a filter index candidate, the filter index candidate being a last decoded filter index; and
    responsive to determining that the flag indicates that a filter index for the current class is equal to the filter index candidate, determining that the current class is mapped with the filter index of filter index candidate

2. The method of claim 1 further comprising:
    responsive to determining that the flag indicates that a filter index for the current class is not equal to the filter index candidate and that the set of filters comprises more than two filters, decoding a filter index for the current class, determining that the current class is mapped with the decoded filter index and assigning the decoded filter index to the filter index candidate.

3. The method of claim 1 further comprising:
responsive to determining that the flag indicates that a filter index for the current class is not equal to the filter index candidate and to determining that the set of filters comprises two filters, determining that the current class is mapped with a filter index representative of a filter distinct from a filter of the filter index candidate and assigning a filter index representative of a filter distinct from a filter of the filter index candidate to the filter index candidate.

4. A method for video encoding, the method comprising:

identifying a mapping between a set of classes and a set of filters, an $i^{th}$ element in the mapping indicates that a class i is mapped with a filter index representative a filter among the set of filters;
responsive to determining that a filter index for a current class is equal to a filter index candidate, encoding a flag indicating that a filter index for the current class is equal to a filter index candidate; and
including, in video data, the encoded flag.

5. The method of claim 4 further comprising:

responsive to determining that the flag indicates that a filter index for a current class is not equal to the filter index candidate and that the set of filters comprises more than two filters, encoding a flag indicating that a filter index for the current class is equal to a filter index candidate, encoding a filter index for the current class, and assigning the encoded filter index to the filter index candidate; and
including, in video data, the encoded flag and the encoded filter index.

6. The method of claim 5 further comprising:

responsive to determining that a filter index for the current class is not equal to the filter index candidate and to determining that the set of filters comprises two filters, encoding a flag indicating that a filter index for the current class is equal to a filter index candidate and assigning a filter index representative of a filter distinct from a filter of the filter index candidate to the filter index candidate and
including, in video data, the encoded filter index.

7. A method for video decoding, the method comprising:

receiving an encoded filter index for a current block wherein a filter index is representative a filter among a set of filters;
for a current block, determining a list of filter index candidates based on a filter index of at least one neighboring block;
arithmetically decoding a filter index for the current block using a first context associated to a probability model of a first candidate in the list of candidates and a second context associated to a probability model of a second candidate in the list of candidates.

8. The method of claim 7, further comprising decoding a flag that indicates whether a type of the filter for the current block, a type of filter being fixed or signaled.

9. The method of claim 8, wherein determining a list of filter index candidates based on a filter index of at least one neighboring block further comprising for each neighboring block among a left neighboring block, a top neighboring block, and a top-left neighboring block:

determining that the neighboring block is valid,
determining that the neighboring block is using a same type of filter than the current block, a type of filter being fixed or signaled,
determining that a filter index of neighboring block is not in the list of filter index candidates, and
adding the filter index of neighboring block in the list of filter index candidates for the current block.

10. The method of claim 7, wherein determining a list of filter index candidates based on a filter index of at least one neighboring block further comprising for each neighboring block among a left neighboring block, a top neighboring block, and a top-left neighboring block:

determining that the neighboring block is valid,

determining that a filter index of neighboring block is not in the list of filter index candidates, and

responsive to determining that the neighboring block is using a type of filter being fixed, adding the filter index of neighboring block in the list of filter index candidates for the current block; or

responsive to determining that the neighboring block is using a type of filter being signaled, adding the filter index of neighboring block increased by an offset corresponding to a number of fixed filters in the list of filter index candidates for the current block.

**11.** A method for video encoding, the method comprising:

for a current block, determining a list of filter index candidates based on a filter index of at least one neighboring block, wherein a filter index is representative a filter among a set of filters;

arithmetically encoding a filter index for the current block using a first context associated to a probability model of a first candidate in the list of candidates and a second context associated to a probability model of a second candidate in the list of candidates; and

including, in video data, the encoded filter index.

**12.** The method of claim 11 further comprising encoding a flag that indicates whether a type of the filter for the current block, a type of filter being fixed or signaled; and

including, in video data, the encoded flag

**13.** The method of claim 11 wherein determining a list of filter index candidates based on a filter index of at least one neighboring block further comprising for each neighboring block among a left neighboring block, a top neighboring block, and a top-left neighboring block:

determining that the neighboring block is valid,

determining that the neighboring block is using a same type of filter than the current block, a type of filter being fixed or signaled,

determining that a filter index of neighboring block is not in the list of filter index candidates, and

adding the filter index of neighboring block in the list of filter index candidates for the current block.

**14.** The method of claim 11 wherein determining a list of filter index candidates based on a filter index of at least one neighboring block further comprising for each neighboring block among a left neighboring block, a top neighboring block, and a top-left neighboring block:

determining that the neighboring block is valid,

determining that a filter index of neighboring block is not in the list of filter index candidates, and

responsive to determining that the neighboring block is using a type of filter being fixed, adding the filter index of neighboring block in the list of filter index candidates for the current block; or

responsive to determining that the neighboring block is using a type of filter being signaled, adding the filter index of neighboring block increased by an offset corresponding to a number of fixed filters in the list of filter index candidates for the current block.

**15.** An apparatus, comprising one or more processors, wherein the one or more processors are configured to perform the method of any of claims 1-14.

**FIG. 1**

FIG. 2

300

330 Entropy Decoding

335 Partitioning

340 Inverse Quantization

350 Inverse Transform

355 (⊕)

390 Prediction enhancement

360 Intra Prediction

370

375 Motion Compensation

365 In-loop Filters

380 Reference Picture Buffer

385 Post-decoding processing

**FIG. 3**

FIG. 4

FIG. 5

| 0 |
| 1 |
| 2 |
| 3 |

| 4 | 5 | 6 | 7 | 8 |
| 9 | 10 | 11 | 12 | 13 |

| 14 | 15 | 16 | 17 | 18 | 19 | x | 19 | 18 | 17 | 16 | 15 | 14 |

| 13 | 12 | 11 | 10 | 9 |
| 8 | 7 | 6 | 5 | 4 |

| 3 |
| 2 |
| 1 |
| 0 |

Spatial Taps          Fixed-Filter-Output based Taps          RecBeforeDb based Taps

**FIG. 6**

| Signaled filter index =3 | Signaled filter index =3 |
| fixed filter index =1 | current |

730   720   710

**FIG. 7**

800

805

Nb_filters = 1 ?

i in 0 to max_classes
mapping[i] = 0

810

end

b = ceil(log2(nb of filters))

i in 0 to max_classes
mapping[i] = read(b)

820

end

FIG. 8

900 — 905

Nb_filters = 1 ?

i in 0 to max_classes
mapping[i] = 0 — 910

end

last_index = 0 — 907

909

b = ceil(log2(nb of filters-1)) — 920

i in 0 to max_classes — 921

is_same = read(1)

922

is_same ?

924

mapping[i] = last_index — 923

925 — Nb_filters = 2

927

code =read(b)

code = 1 – last_index — 926

code>= last_index ?

928

code = code + 1

929

mapping[i] = code
last_index = code

end

**FIG. 9**

1000

1010

fixed filter ?

n = number of APS filters    1030

n = number of fixed filters    1020

index = readTruncatedBinary(n)    1040

end

**FIG. 10**

1100

1110

fixed filter ?

n = number of APS filters    1130

n = number of fixed filters    1120

1140

Create L list of filter index candidate    1142

is_cand0 = readCabac(ctx0)    1143

is_cand0 ?

yes    1144

index = L[0]

no

is_cand1 = readCabac(ctx1)    1145

is_cand1 ?    1146

yes    1147

index = L[1]

no

index =L[2+ readTruncatedBinary(n-2)]    1148

end

**FIG. 11**

FIG. 12

## EUROPEAN SEARCH REPORT

Europäisches
Patentamt
European
Patent Office
Office européen
des brevets

**Application Number**

EP 24 30 5566

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/215959 A1 (CHEN CHING-YEH [TW] ET AL) 22 August 2013 (2013-08-22)<br>* abstract *<br>* paragraphs [0002], [0021], [0023] *<br>* claims 1, 3 * | 1-15 | INV.<br>H04N19/82<br>H04N19/117<br>H04N19/70<br>H04N19/463<br>H04N19/176 |
| A | US 2017/237981 A1 (KARCZEWICZ MARTA [US] ET AL) 17 August 2017 (2017-08-17)<br>* paragraphs [0068], [0078], [0090] * | 1-15 | H04N19/86 |
| X | US 2019/349590 A1 (KARCZEWICZ MARTA [US] ET AL) 14 November 2019 (2019-11-14)<br>* paragraphs [0058], [0060] - [0063], [0070] *<br>* figure 2 * | 1-6,15 | |
| Y<br>A | US 2020/252653 A1 (RUSANOVSKYY DMYTRO [US] ET AL) 6 August 2020 (2020-08-06)<br>* paragraphs [0140] - [0141], [0143], [0146], [0153], [0158], [0164] - [0166] *<br>* figure 22 * | 7-9,<br>11-13<br>10,14 | |
| Y | US 2020/195920 A1 (RACAPE FABIEN [US] ET AL) 18 June 2020 (2020-06-18)<br>* paragraphs [0081], [0087] - [0088], [0091] - [0092], [0095], [0097] * | 7-9,<br>11-13 | |

**TECHNICAL FIELDS SEARCHED (IPC)**

H04N

The present search report has been drawn up for all claims

| Place of search | Date of completion of the search | Examiner |
|---|---|---|
| The Hague | 10 December 2024 | Mayer, Claudia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................................
& : member of the same patent family, corresponding
document

EPO FORM 1503 03.82 (P04C01)

Europäisches
Patentamt

European
Patent Office

Office européen
des brevets

**Application Number**

EP 24 30 5566

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

**Application Number**

EP 24 30 5566

The Search Division considers that the present European patent application does not comply with the requirements of unity of invention and relates to several inventions or groups of inventions, namely:

```
1. claims:  1-6(completely);  15(partially)

   Mapping between set of classes and set of filters.
                      - - -


2. claims:  7-14(completely);  15(partially)

   Context adaptive arithmetic coding of filter index.
                      - - -
```

## ANNEX TO THE EUROPEAN SEARCH REPORT
## ON EUROPEAN PATENT APPLICATION NO.

EP 24 30 5566

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2024

| Patent document cited in search report | | Publication date | Patent family member(s) | | Publication date |
|---|---|---|---|---|---|
| US 2013215959 | A1 | 22-08-2013 | CN 103392338 | A | 13-11-2013 |
| | | | EP 2661879 | A1 | 13-11-2013 |
| | | | KR 20130095279 | A | 27-08-2013 |
| | | | US 2013215959 | A1 | 22-08-2013 |
| | | | US 2018109785 | A1 | 19-04-2018 |
| | | | WO 2012092841 | A1 | 12-07-2012 |
| US 2017237981 | A1 | 17-08-2017 | BR 112018016560 | A2 | 02-01-2019 |
| | | | BR 112018016561 | A2 | 02-01-2019 |
| | | | BR 112018016598 | A2 | 26-12-2018 |
| | | | CA 3011867 | A1 | 24-08-2017 |
| | | | CA 3012051 | A1 | 24-08-2017 |
| | | | CA 3012590 | A1 | 24-08-2017 |
| | | | CN 108605126 | A | 28-09-2018 |
| | | | CN 108605127 | A | 28-09-2018 |
| | | | CN 108605128 | A | 28-09-2018 |
| | | | CN 113891076 | A | 04-01-2022 |
| | | | EP 3417613 | A1 | 26-12-2018 |
| | | | EP 3417614 | A1 | 26-12-2018 |
| | | | EP 3417615 | A1 | 26-12-2018 |
| | | | ES 2863275 | T3 | 11-10-2021 |
| | | | ES 2866894 | T3 | 20-10-2021 |
| | | | ES 2927641 | T3 | 08-11-2022 |
| | | | HU E053920 | T2 | 28-07-2021 |
| | | | HU E053984 | T2 | 30-08-2021 |
| | | | HU E060035 | T2 | 28-01-2023 |
| | | | JP 6914951 | B2 | 04-08-2021 |
| | | | JP 7055745 | B2 | 18-04-2022 |
| | | | JP 7071603 | B1 | 27-05-2022 |
| | | | JP 7233218 | B2 | 06-03-2023 |
| | | | JP 2019505143 | A | 21-02-2019 |
| | | | JP 2019505144 | A | 21-02-2019 |
| | | | JP 2019508971 | A | 28-03-2019 |
| | | | JP 2022084028 | A | 06-06-2022 |
| | | | KR 20180113527 | A | 16-10-2018 |
| | | | KR 20180113528 | A | 16-10-2018 |
| | | | KR 20180113529 | A | 16-10-2018 |
| | | | TW 201733353 | A | 16-09-2017 |
| | | | TW 201735637 | A | 01-10-2017 |
| | | | TW 201740730 | A | 16-11-2017 |
| | | | US 2017237981 | A1 | 17-08-2017 |
| | | | US 2017237982 | A1 | 17-08-2017 |
| | | | US 2017238020 | A1 | 17-08-2017 |
| | | | US 2022337825 | A1 | 20-10-2022 |
| | | | US 2024357102 | A1 | 24-10-2024 |
| | | | WO 2017142939 | A1 | 24-08-2017 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 30 5566

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2024

| Patent document cited in search report | Publication date | Patent family member(s) | | Publication date |
|---|---|---|---|---|
| | | WO | 2017142943 A1 | 24-08-2017 |
| | | WO | 2017142946 A1 | 24-08-2017 |
| US 2019349590 A1 | 14-11-2019 | BR | 112018072932 A2 | 19-02-2019 |
| | | CA | 3019668 A1 | 16-11-2017 |
| | | CN | 109076228 A | 21-12-2018 |
| | | EP | 3456046 A1 | 20-03-2019 |
| | | JP | 2019519141 A | 04-07-2019 |
| | | KR | 20190006174 A | 17-01-2019 |
| | | TW | 201804794 A | 01-02-2018 |
| | | US | 2017324962 A1 | 09-11-2017 |
| | | US | 2019349590 A1 | 14-11-2019 |
| | | WO | 2017196852 A1 | 16-11-2017 |
| US 2020252653 A1 | 06-08-2020 | NONE | | |
| US 2020195920 A1 | 18-06-2020 | CN | 110999289 A | 10-04-2020 |
| | | EP | 3422716 A1 | 02-01-2019 |
| | | EP | 3646588 A1 | 06-05-2020 |
| | | US | 2020195920 A1 | 18-06-2020 |
| | | WO | 2019002166 A1 | 03-01-2019 |

EPO FORM P0459

For more details about this annex : see Official Journal of the European Patent Office, No. 12/82

page 2 of 2